# EUROPÄISCHE PATENTSCHRIFT

(11) **EP 3 393 846 B1**
(45) Veröffentlichungstag und Bekanntmachung des Hinweises auf die Patenterteilung: **25.03.2026**
(21) Anmeldenummer: 16809291.4
(22) Anmeldetag: 06.12.2016
(51) Int. Cl.: B60L 53/39, B60L 53/122, B60L 53/126

(54) **SYSTEM ZUR INDUKTIVEN ÜBERTRAGUNG ELEKTRISCHER LEISTUNG AN FAHRZEUGE UND VERFAHREN ZUM BETREIBEN EINES SYSTEMS**
SYSTEM FOR INDUCTIVE TRANSMISSION OF ELECTRICAL POWER TO VEHICLES AND METHOD FOR OPERATING A SYSTEM
SYSTÈME DE TRANSMISSION INDUCTIVE DE PUISSANCE ÉLECTRIQUE VERS UN VÉHICULE ET PROCÉDÉ POUR FAIRE FONCTIONNER UN SYSTÈME

(30) Priorität: 22.12.2015 DE 102015016682
(43) Veröffentlichungstag der Anmeldung: 31.10.2018
(73) Patentinhaber: SEW-EURODRIVE GmbH & Co. KG, 76646 Bruchsal (DE)
(72) Erfinder: SCHILLING, Rainer, 76703 Kraichtal (DE); GEIßLER, Michael, 76709 Kronau (DE); BÖCKLE, Jürgen, 76646 Bruchsal (DE); SCHMIDT, Josef, 76676 Graben-Neudorf (DE); KUTZ, Michael, 76661 Philippsburg (DE); KÖHLER, Bernhard, 76646 Bruchsal (DE); SCHWESINGER, Klaus, 76646 Bruchsal (DE)
(86) Internationale Anmeldenummer: PCT/EP2016/025167
(87) Internationale Veröffentlichungsnummer: WO 2017/108199

(56) Entgegenhaltungen:
- EP-A1- 2 873 132
- EP-A2- 0 289 868
- FR-A1- 2 998 427
- GB-A- 2 496 433
- GB-A- 2 502 820
- US-A- 5 821 728
- US-B1- 7 164 211

## Beschreibung

Die Erfindung betrifft ein System zur induktiven Übertragung elektrischer Leistung an Fahrzeuge und ein Verfahren zum Betreiben eines Systems.

Es ist allgemein bekannt, dass elektrische Energie induktiv übertragbar ist.

**Aus der** EP 0 289 868 A2 **ist als nächstliegender Stand der Technik ein System zur induktiven Übertragung elektrischer Leistung bekannt, bei dem seriell angeordnete Ladeabschnitte zu- oder abschaltbar sind.**

**Aus der** US 5 821 728 A **ist die induktive Beladung eines Straßenfahrzeugs bekannt.**

**Aus der** GB 2 502 820 A **ist eine induktive Versorgung für Schienenfahrzeuge bekannt.**

**Aus der** US 7 164 211 B1 **ist ein Fahrzeug-assistierter Leistungsgenerator bekannt.**

**Aus der** EP 2 873 132 A1 **ist ein Abstimmschaltkreis bekannt.**

**Aus der** GB 2 496 433 A **ist ein induktives Übertragen von elektrischer Energie an ein Fahrzeug bekannt.**

**Aus der** FR 2 998 427 A1 **ist ein induktives Ladesystem für eine Fahrzeugbatterie bekannt.**

Der Erfindung liegt daher die Aufgabe zugrunde, ein System zur berührungslosen Energieübertragung in umweltschonender Weise weiterzubilden.

Erfindungsgemäß wird die Aufgabe bei dem System nach den in Anspruch 1 und bei dem Verfahren nach den in Anspruch 6 angegebenen Merkmalen gelöst.

Von Vorteil ist dabei, dass die Ressourcen und somit die Umwelt geschont wird, da Energie eingespart wird. Denn wenn in einem der Ladebereiche kein Fahrzeug zum Beladen vorhanden ist, wird der Schalter geschlossen und somit der Primärleiterabschnitt im entsprechenden Ladebereich kurzgeschlossen und somit stromlos. Auf diese Weise sind Ohm'sche Verluste im Primärleiterabschnitt vermeidbar.

**Erfindungsgemäß** ist der jeweilige Schalter des jeweiligen Ladebereichs von einer Sensorvorrichtung steuerbar,

wobei die Sensorvorrichtung das Vorhandensein eines Fahrzeugs im zur Sensorvorrichtung zugeordneten Ladebereich detektiert, insbesondere wobei abhängig vom Überschreiten oder Unterschreiten eines Schwellwertes an induktiver Kopplung zwischen dem Primärleiterabschnitt des Ladebereichs und einer am Fahrzeug angeordneten Sekundärwicklung der steuerbare Schalter betätigt wird, insbesondere geöffnet oder geschlossen wird. Von Vorteil ist dabei, dass die Detektion des Fahrzeugs dann erreicht ist, wenn der Schwellwert überschritten wird. Wenn jedoch der Schwellwert noch nicht überschritten ist, ist das Fahrzeug nicht vorhanden oder so weit entfernt, dass die induktive Kopplung noch zu schwach ist für die Übertragung relevanter Leistungen.

Der am Fahrzeug angeordneten Sekundärwicklung ist ebenfalls eine Kapazität parallel und/oder in Reihe zugeschaltet, so dass die zugehörige Resonanzfrequenz im Wesentlichen der Frequenz des von der Wechselstromquelle in den Primärleiter eingeprägten Stromanteils entspricht. Auf diese Weise ist bei der Bestimmung der Kopplungsstärke zwischen Primärleiterabschnitt und Sekundärwicklung der Schwellwert unterschreitbar, indem die Sekundärwicklung von einem fahrzeugseitigen steuerbaren Schalter kurzgeschlossen wird. Dies ist beispielsweise auch sinnvoll, wenn der Energiespeicher des Fahrzeugs vollgeladen ist und somit keine Energie aufnehmbar ist. Bei geöffnetem Schalter ist der fahrzeugseitige Resonanzkreis wirksam und daher eine induktive Kopplung vorhanden, wenn das Fahrzeug mit seiner Sekundärwicklung nahe genug am Primärleiterabschnitt angeordnet ist.

Bei einer vorteilhaften Ausgestaltung ist die Sensorvorrichtung mittels eines Kommunikationskanals, insbesondere Datenübertragungskanals, mit einer die Wechselstromquelle umfassenden Einspeiseeinheit, insbesondere Elektrogerät, zur Datenübertragung verbunden. Von Vorteil ist dabei, dass die Detektion eines Fahrzeugs an eine zentral angeordnete Steuerung weitermeldbar ist.

Bei einer vorteilhaften Ausgestaltung ist der Kommunikationskanal mittels Signalleitungen ausgeführt,
wobei mittels der Signalleitungen von der Einspeiseeinheit zur Sensorvorrichtung Daten übertragbar sind,
insbesondere wobei Einspeiseeinheit und Sensorvorrichtung Busteilnehmer eines Datenbusses sind. Von Vorteil ist dabei, dass eine leitungsgebundenen und somit störsichere Übertagung ausführbar ist.

Bei einer vorteilhaften Ausgestaltung umfasst der Kommunikationskanal auf den Primärleiter aufmodulierte Signale,
welche von der Einspeiseeinheit und/oder von der Sensorvorrichtung auf den Primärleiter aufmoduliert werden,
insbesondere wobei die Frequenz der aufmodulierten Signale höher ist als die Frequenz des von der Wechselstromquelle in den Primärleiter eingeprägten Wechselstroms, insbesondere welcher eine Frequenz zwischen 10 und 1000 kHz aufweist. Von Vorteil ist dabei, dass keine weiteren Leitungen notwendig sind. Es ist somit die für die Leistungsübertragung notwendige Verkabelung nutzbar. Denn der Primärleiter und der Primärleiterabschnitt sind zur Übertragung von Starkstrom, beispielsweise mehr als 10 Ampere.

**Erfindungsgemäß** sind die Sensorvorrichtungen aus dem Primärleiter induktiv versorgt, wobei die jeweilige Sensorvorrichtung hierzu jeweils eine induktiv mit dem Primärleiter gekoppelte Sekundärwicklung aufweisen. Von Vorteil ist dabei, dass keine separate Spannungsversorgung notwendig ist und somit der Aufwand für Verkabelung gering ist.

**Erfindungsgemäß** weist die jeweilige Sensorvorrichtung einen Energiespeicher zur Pufferung einer zeitlich unterbrochenen Versorgung mit elektrischer Energie auf. Von Vorteil ist dabei, dass der Energieverbrauch der Sensorvorrichtung in den Unterbrechungszeiten jeweils geringer ist als die im Energiespeicher speicherbare Energiemenge.

Wichtige Merkmale bei dem Verfahren zum Betreiben eines **vorgenannten** Systems sind, dass die jeweilige Sensorvorrichtung bei nicht-detektiertem, insbesondere im zur Sensorvorrichtung zugeordneten Ladebereich, insbesondere nicht-vorhandenem, Fahrzeug das Schließen des zur jeweiligen Sensorvorrichtung zugeordneten Schalters bewirkt.

Von Vorteil ist dabei, dass Verlustleistungen verringerbar sind und somit die Umwelt schonbar ist.

Bei einer vorteilhaften Ausgestaltung wird bei im zur Sensorvorrichtung zugeordneten Ladebereich detektiertem Fahrzeug der zum Ladebereich zugehörige Schalter geöffnet. Von Vorteil ist dabei, dass das Fahrzeug induktiv beladbar ist mit Energie.

Bei einer vorteilhaften Ausgestaltung wird abhängig von der Anzahl geschlossener Schalter des Systems der Betrag des in den Primärleiter von der Wechselstromquelle eingeprägten Stromes gesteuert. Von Vorteil ist dabei, dass die Verlustleistung noch weiter reduzierbar ist.

Weitere Vorteile ergeben sich aus den Unteransprüchen.

Die Erfindung wird nun anhand von Abbildungen näher erläutert:
In der Figur 1 ist ein erstes erfindungsgemäßes System schematisch skizziert.
In der Figur 2 ist ein anderes erfindungsgemäßes System schematisch skizziert.

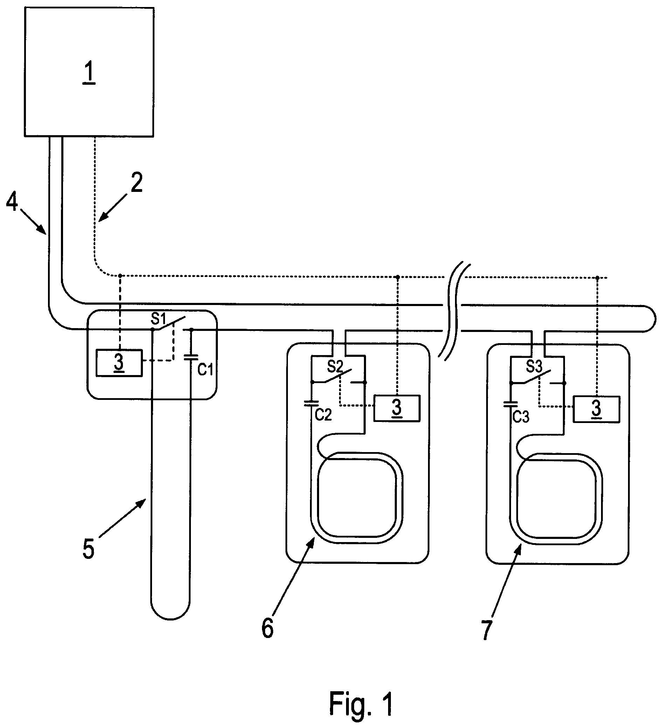

Wie in Figur 1 gezeigt, weist das System eine Wechselstromquelle 1 auf, die mehrere stationär angeordnete Ladebereiche seriell versorgt, die zur induktiven Übertragung elektrischer Leistung an Fahrzeuge vorgesehen sind.

Die Wechselstromquelle 1 speist einen mittelfrequenten Strom in eine Primärleiterschleife 4, welche einen Hinleiter und einen Rückleiter aufweist, die im Wesentlichen parallel zueinander verlegt sind.

Jeder Ladebereich ist zuschaltbar oder abschaltbar mittels der Schalter (S1, S2, S3). Jeder der Ladebereiche weist ebenfalls einen Primärleiterabschnitt auf, welcher parallel zum jeweiligen Schalter (S1, S2, S3) elektrisch verbunden ist.

Durch schließen des jeweiligen Schalters (S1, S2, S3) ist der jeweilige Ladebereich kurzschließbar und der im Primärleiter 4 fließende Strom wird vorbeigeleitet.

Da die Wechselstromquelle 1 eine Stromquelle ist, ist allen Ladebereichen derselbe Strom zur Verfügung stellbar.

Bei jeweils geöffnetem Schalter (S1, S2, S3) fließt also der Strom durch den jeweiligen im Ladebereich verlegten Primärleiterabschnitt (5, 6, 7).

Der Primärleiterabschnitt 5 eines ersten Ladebereichs ist wiederum als langgestreckt verlegte Leiterschleife ausgeführt, die vorzugsweise am Boden angeordnet ist oder entlang einer Schiene. Somit ist ein Fahrzeug induktiv mit Energie versorgbar, das eine Sekundärwicklung aufweist, welcher eine Kapazität parallel und/oder in Reihe zugeschaltet ist, wobei die Resonanzfrequenz des somit gebildeten Schwingkreises im Wesentlichen der Frequenz des in den Primärleiter 4 eingeprägten Wechselstromes gleicht. Auf diese Weise ist auch bei großem und/oder schwankendem Abstand ein hoher Wirkungsgrad bei der Leistungsübertragung erreichbar. Das Fahrzeug weist elektrische Verbraucher, wie elektromotorischer Traktionsantrieb und Steuerungselektronik, auf, die aus einem Energiespeicher des Fahrzeugs versorgbar sind, der über die induktive Leistungsübertragung speisbar ist. Somit ist auch ein Schwanken der übertragenen Leistung ausgleichbar.

Bei Anordnung des Primärleiterabschnitts 5 am Boden ist die Sekundärwicklung vorzugsweise an der Unterseite des Fahrzeuges angebracht und das Fahrzeug weist eine Spurführungsvorrichtung auf, um entlang einer durch den langgestreckt verlegten Primärleiterabschnitt vorgegebenen Bahn zu verfahren.

Bei Anordnung des Primärleiterabschnitts 5 entlang einer Schiene ist ein Schienenfahrzeug versorgbar.

Die Anlage, in welcher das System installiert ist, weist eine Verfahrfläche am Boden auf, an welcher nicht nur der Primärleiterabschnitt 5 angeordnet ist, sondern auch die weiteren Ladebereiche 6 und 7. Dieser jeweilige Ladebereich (6, 7) ist weniger ausgedehnt als der Primärleiterabschnitt 5. Der diesem jeweiligen Ladebereich (6, 7) zugeordnete Primärleiterabschnitt ist jeweils als Primärwicklung (6, 7) ausgeführt. Somit ist ein Fahrzeug, an dessen Unterseite eine Sekundärwicklung angeordnet ist, mit einer hohen Leistung induktiv beladbar. Denn die induktive Kopplung ist in den Ladebereichen (6, 7) höher als in dem mit langgestreckt ausgeführten Primärleiterabschnitt 5 vorgesehenen Ladebereich.

Jeder der Ladebereiche (5, 6, 7) weist eine dem jeweiligen Primärleiterabschnitt (5,6,7) des Ladebereiches (5, 6, 7) seriell zugeschaltete Kapazität (C1, C2, C3) auf, wobei die Kapazität (C1, C2, C3) derart dimensioniert ist, dass die Resonanzfrequenz des aus der Induktivität des jeweiligen Primärleiterabschnitts (5, 6,7 ) und der jeweils in Reihe zugeschalteten Kapazität (C1, C2, C3) gebildeten Schwingkreises im Wesentlichen der Frequenz des in den Primärleiter 4 eingeprägten Wechselstroms gleicht.

Jedem Ladebereich (5, 6, 7) ist eine Sensorvorrichtung 3 zugeordnet, die zur Detektion eines Fahrzeugs vorgesehen ist. Die Sensorvorrichtung 3 stellt jeweils ein Ausgangssignal zur Verfügung, mit welchem der jeweilige Schalter (S1, S2, S3) ansteuerbar ist. Wenn also kein Fahrzeug und somit auch kein induktiver Abnehmer, wie Sekundärwicklung, vorhanden ist und somit auch keine ausreichende induktive Kopplung des jeweiligen Primärleiterabschnitts (5, 6, 7) an eine Sekundärwicklung eines zu beladenden Fahrzeugs, bleibt der Schalter (S1, S2, S3) jeweils geschlossen, so dass der der jeweiligen Sensorvorrichtung 3 zugeordnete Ladebereich kurzgeschlossen und somit stromlos bleibt.

Wenn jedoch von der jeweiligen Sensorvorrichtung 3 ein Fahrzeug detektiert wird und somit eine Sekundärwicklung des Fahrzeugs induktiv gekoppelt zum Primärleiterabschnitt 5, 6, oder 7 eingetroffen und/oder angeordnet ist, wird der entsprechende Schalter (S1, S2, S3) geöffnet und somit der jeweils zugehörige Primärleiterabschnitt (5, 6, 7) bestromt.

Die Sensorvorrichtung 3 ist jeweils an einem Datenbus angeschlossen, der auch mit der die Wechselstromquelle 1 umfassenden Einspeiseeinheit verbunden ist. Somit sind Daten übertragbar zwischen der Einspeiseeinheit und den Sensorvorrichtungen 3. Insbesondere ist das Eintreffen eines Fahrzeugs in einem der Ladebereiche meldbar an die Einspeiseeinheit. Somit ist die erforderliche Leistung von der Einspeiseeinheit anpassbar.

Die Versorgung der Sensorvorrichtungen 3 ist mittels der Signalleitungen 2 möglich, welche auch Versorgungsleitungen umfassen oder Datenbusleitungen aufweisen, die auch als Versorgungsleitungen nutzbar sind. Auf diese Weise sind die Sensorvorrichtungen 3 unabhängig von der in den Primärleiter 4 eingeprägten Leistung versorgbar mit elektrischer Leistung. Wenn also in keinem der Ladebereiche (5, 6, 7) ein Fahrzeug detektierbar ist, ist auch ein Abschalten des in den Primärleiter 4 eingeprägten Stroms möglich und somit Energie einsparbar. Sobald eine der Sensorvorrichtungen 3 ein Fahrzeug detektiert, wird der Strom in den Primärleiter 4 eingeprägt.

Bei einem weiteren erfindungsgemäßen Ausführungsbeispiel werden die Sensorvorrichtungen 3 nicht aus den Signalleitungen 2 versorgt, sondern aus dem Primärleiter 4, wobei hierzu jede Sensorvorrichtung 3 eine Sekundärwicklung aufweist, welche induktiv gekoppelt zum Primärleiter 4 angeordnet ist. Somit ist unabhängig von der Schalterstellung der Schalter (S1, S2, S3) eine Versorgung der Sensorvorrichtungen 3 sicher gewährleistbar. Allerdings wird auch dann von der Einspeiseeinheit ein Strom, also Wechselstrom, in den Primärleiterabschnitt 4 eingeprägt, wenn keine Fahrzeuge in den Ladebereichen vorhanden sind.

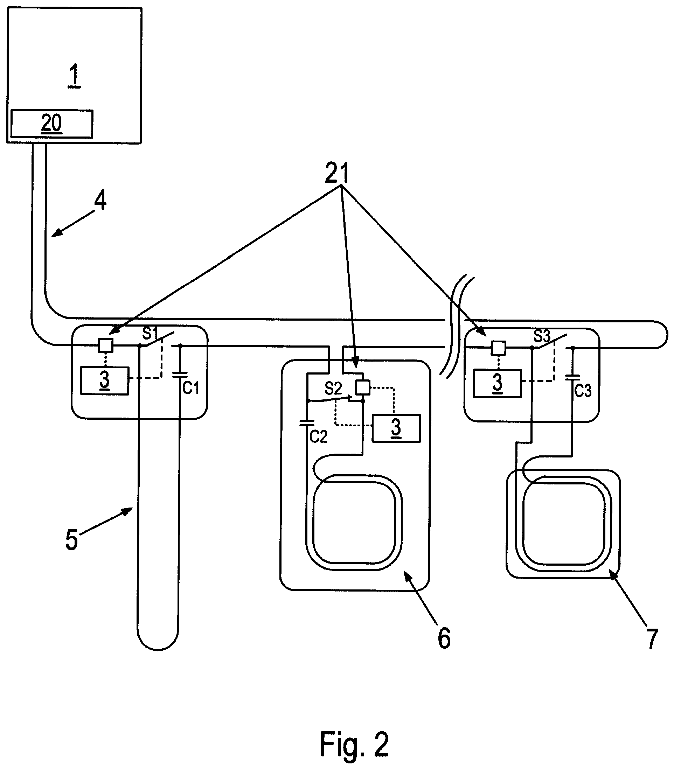

Wie in Figur 2 gezeigt, ist auch ein Übertragen der Daten durch Aufmodulation von höher frequenten Stromsignalanteilen auf den von der Einspeiseeinheit in den Primärleiter 4 eingeprägten Wechselstrom ausführbar. Somit entfallen die Signalleitungen 2 der Figur 1. Denn die Einspeiseeinheit weist einen Datenkoppler 20 auf, mit welchem die Daten als höher frequente Stromanteile aufmodulierbar sind. Ebenso ist jede Sensorvorrichtung 3 mit einem Datenkoppler 21 verbunden, mit welchem die Sensorsignale als höher frequente Stromanteile auf den Primärleiter 4 aufmodulierbar sind.

Des Weiteren sind mit jedem der genannten Datenkoppler 20 und/oder 21 aufmodulierte Stromanteile demodulierbar und somit die enthaltene Information dekodierbar und weiterleitbar zum Ausführen einer Aktion, wie Abschalten oder Reduzieren des Einprägens des niederfrequenteren Stromanteils oder dergleichen.

Bei einem weiteren erfindungsgemäßen Ausführungsbeispiel wird die elektrische Versorgung durch den höher frequenteren als der mittelfrequente, die Leistung übertragende, von der Einspeiseeinheit eingeprägte Wechselstromanteil von der Einspeiseeinheit aufmodulierte Stromanteil bereitgestellt. Somit ist auch bei Abschalten des mittelfrequenten von der Einspeiseeinheit eingeprägten Wechselstromanteils eine Versorgung der Sensorvorrichtungen ermöglicht. Allerdings muss von der Einspeiseeinheit ein entsprechender Stromanteil aufgeprägt werden. Falls auch Unterbrechungen dieses Stromanteils zugelassen werden sollen, muss der jeweilige Datenkoppler 20 oder 21 einen entsprechend dimensionierten Energiespeicher aufweisen zur Pufferung der elektrischen Versorgung der Sensorvorrichtungen 3 und der Datenkoppler (20, 21).

Wenn also nun ein Fahrzeug in einen Ladebereich (5, 6, 7) eintrifft und von der zugehörigen Sensorvorrichtung 3 detektiert wird, wird ein entsprechendes Signal über den zugehörigen Datenkoppler 20 oder 21 an die Einspeiseeinheit mit Wechselstromquelle 1 übertragen. Ebenso wird bei Verlassen des Ladebereichs (5, 6, 7) eine entsprechende Information an die Einspeiseeinheit übertragen. Abhängig von der Anzahl der aktuell detektierten Fahrzeuge wird dann von der Einspeiseeinheit der mittelfrequente die Leistung bestimmende Stromanteil gesteuert.

Die Wechselstromquelle 1 der Einspeiseeinheit erzeugt den mittelfrequenten Stromanteil, welcher eine Frequenz zwischen 10 und 1000 kHz aufweist und eine Stromstärke von über 1 Ampere aufweist, insbesondere zwischen 10 und 100 Ampere.

Die Signalleitung 2 umfasst vorzugsweise nicht nur Leitungen des Datenbusses sondern auch Niederspannungsversorgungsleitungen, insbesondere 24 Volt - Leitungen.

Der Primärleiter 4 ist als Stromschleife ausgeführt, welche einen Hinleiter und einen Rückleiter aufweist. Der Primärleiter 4 ist vorzugsweise als langgestreckt verlegte Leiterschleife angeordnet.

Der Primärleiterabschnitt 5 des diesen umfassenden Ladebereichs ist ebenfalls langgestreckt verlegt.

### Bezugszeichenliste

1 Wechselstromquelle
2 Signalleitung, insbesondere Datenbus und Niederspannungsversorgungsleitungen, insbesondere 24 Volt - Leitungen,
3 Sensorvorrichtung
4 Primärleiter, insbesondere aufweisend Hinleiter und Rückleiter der Primärleiterschleife
5 langgestreckt verlegter Primärleiterabschnitt
6 Primärwicklung
7 Primärwicklung
20 Datenkoppler
21 Datenkoppler
S1 steuerbarer Schalter, insbesondere Leistungsschalter
S2 steuerbarer Schalter, insbesondere Leistungsschalter
S3 steuerbarer Schalter, insbesondere Leistungsschalter
C1 Kapazität
C2 Kapazität
C3 Kapazität

## Patentansprüche

1. System zur induktiven Übertragung elektrischer Leistung an Fahrzeuge,
wobei das System eine Wechselstromquelle (1) aufweist, die mehrere stationär angeordnete Ladebereiche seriell versorgt,
**wobei** jeder Ladebereich einen jeweiligen, **eine jeweilige seriell zugeschaltete Kapazität (C1, C2, C3) aufweisenden** Primärleiterabschnitt aufweist, dem jeweils ein steuerbarer Schalter parallel zugeschaltet ist,
so dass der Primärleiterabschnitt bei geschlossenem Schalter kurzgeschlossen ist und bei geöffnetem Schalter aus einem aus der Wechselstromquelle (1) gespeisten Primärleiter (4), versorgt ist,
wobei jedem Ladebereich eine Parallelschaltung aus dem jeweiligen Primärleiterabschnitt des Ladebereichs und dem jeweiligen Schalter zugordnet ist und diese Parallelschaltungen der Ladebereiche in Reihe geschaltet sind und somit seriell aus der Wechselstromquelle (1) versorgt sind mittels des Primärleiters (4),
**wobei der jeweilige Schalter des jeweiligen Ladebereichs von einer Sensorvorrichtung (3) steuerbar ist,**
**wobei die Sensorvorrichtung (3) das Vorhandensein eines Fahrzeugs im zur Sensorvorrichtung (3) zugeordneten Ladebereich detektiert,**
wobei **die jeweilige seriell zugeschaltete Kapazität (C1, C2, C3) derart dimensioniert ist, dass die Resonanzfrequenz des aus der Induktivität des jeweiligen Primärleiterabschnitts (5, 6,7) und der jeweils seriell zugeschalteten Kapazität (C1, C2, C3) gebildeten** Schwingkreises der Frequenz des in den Primärleiter (4) eingeprägten Wechselstroms gleicht,
**dadurch gekennzeichnet, dass** die Sensorvorrichtungen (3) aus dem Primärleiter (4) induktiv versorgt sind,
wobei die jeweilige Sensorvorrichtung (3) hierzu jeweils eine induktiv mit dem Primärleiter (4) gekoppelte Sekundärwicklung aufweisen,
wobei die jeweilige Sensorvorrichtung (3) einen Energiespeicher zur Pufferung einer zeitlich unterbrochenen Versorgung mit elektrischer Energie aufweist.

2. System nach Anspruch 1,
**dadurch gekennzeichnet, dass**
abhängig vom Überschreiten oder Unterschreiten eines Schwellwertes an induktiver Kopplung zwischen dem Primärleiterabschnitt des Ladebereichs und einer am Fahrzeug angeordneten Sekundärwicklung der steuerbare Schalter betätigt wird, insbesondere geöffnet oder geschlossen wird.

3. System nach mindestens einem der vorangegangenen Ansprüche,
**dadurch gekennzeichnet, dass**
die Sensorvorrichtung (3) mittels eines Kommunikationskanals, insbesondere Datenübertragungskanals, mit einer die Wechselstromquelle (1) umfassenden Einspeiseeinheit, insbesondere Elektrogerät, zur Datenübertragung verbunden ist.

4. System nach mindestens einem der vorangegangenen Ansprüche,
**dadurch gekennzeichnet, dass**
der Kommunikationskanal mittels Signalleitungen ausgeführt ist,
wobei mittels der Signalleitungen von der Einspeiseeinheit zur Sensorvorrichtung (3) Daten übertragbar sind,
insbesondere wobei Einspeiseeinheit und Sensorvorrichtung (3) Busteilnehmer eines Datenbusses sind.

5. System nach mindestens einem der vorangegangenen Ansprüche,
**dadurch gekennzeichnet, dass**
der Kommunikationskanal auf den Primärleiter (4) aufmodulierte Signale umfasst,
welche von der Einspeiseeinheit und/oder von der Sensorvorrichtung (3) auf den Primärleiter (4) aufmoduliert werden,
insbesondere wobei die Frequenz der aufmodulierten Signale höher ist als die Frequenz des von der Wechselstromquelle (1) in den Primärleiter (4) eingeprägten Wechselstroms,
insbesondere welcher eine Frequenz zwischen 10 und 1000 kHz aufweist.

6. Verfahren zum Betreiben eines Systems nach mindestens einem der vorangegangenen Ansprüche,
**dadurch gekennzeichnet, dass**
die jeweilige Sensorvorrichtung (3) bei nicht-detektiertem, insbesondere im zur Sensorvorrichtung (3) zugeordneten Ladebereich, insbesondere nicht-vorhandenem, Fahrzeug das Schließen des zur jeweiligen Sensorvorrichtung (3) zugeordneten Schalters bewirkt
**und dass**
**bei im zur Sensorvorrichtung (3) zugeordneten Ladebereich detektierten Fahrzeug der zum Ladebereich zugehörige Schalter geöffnet wird.**

7. Verfahren nach Anspruch **6,**
**dadurch gekennzeichnet, dass**
abhängig von der Anzahl geschlossener Schalter des Systems der Betrag des in den Primärleiter (4) von der Wechselstromquelle (1) eingeprägten Stromes gesteuert wird.

## Claims

1. System for inductively transmitting electrical power to vehicles,
wherein the system comprises an alternating current source (1) which supplies power to a plurality of stationarily arranged charging areas in series,
wherein each charging area comprises a respective primary conductor section having a respective series-connected capacitor (C1, C2, C3), each primary conductor section having a controllable switch connected in parallel therewith,
such that the primary conductor section is short-circuited when the switch is closed, and is supplied with power from a primary conductor (4), which is fed from the alternating current source (1), when the switch is open,
wherein a parallel circuit formed of the respective primary conductor section of the charging area and the respective switch is assigned to each charging area, and these parallel circuits of the charging areas are connected in series and thus are supplied with power in series from the alternating current source (1) by means of the primary conductor (4),
wherein the respective switch of the respective charging area can be controlled by a sensor device (3),
wherein the sensor device (3) detects the presence of a vehicle in the charging area assigned to the sensor device (3),
wherein the respective series-connected capacitor (C1, C2, C3) is dimensioned such that the resonant frequency of the resonant circuit formed of the inductor of the respective primary conductor section (5, 6, 7) and the respective series-connected capacitor (C1, C2, C3) corresponds to the frequency of the alternating current impressed in the primary conductor (4), **characterized in that**
the sensor devices (3) are inductively supplied with power from the primary conductor (4),
wherein to this end the respective sensor device (3) has in each case a secondary winding inductively coupled to the primary conductor (4),
wherein the respective sensor device (3) has an energy store for buffering a temporarily interrupted power supply with electrical energy.

2. System according to claim 1,
**characterized in that**
the controllable switch is actuated, in particular opened or closed, as a function of the exceeding or undershooting of a threshold value of inductive coupling between the primary conductor section of the charging area and a secondary winding arranged on the vehicle.

3. System according to at least one of the preceding claims, **characterized in that**
the sensor device (3) is connected for data transmission purposes by means of a communication channel, in particular a data transmission channel, to a feed-in unit, in particular an electrical device, which comprises the alternating current source (1).

4. System according to at least one of the preceding claims, **characterized in that**
the communication channel is embodied by means of signal lines, wherein data can be transmitted from the feed-in unit to the sensor device (3) by means of the signal lines,
in particular wherein the feed-in unit and the sensor device (3) are bus subscribers on a data bus.

5. System according to at least one of the preceding claims, **characterized in that**
the communication channel comprises signals modulated onto the primary conductor (4),
which are modulated onto the primary conductor (4) by the feed-in unit and/or by the sensor device (3),
in particular wherein the frequency of the modulated signals is higher than the frequency of the alternating current impressed in the primary conductor (4) by the alternating current source (1),
in particular which has a frequency between 10 and 1000 kHz.

6. Method for operating a system according to at least one of the preceding claims,
**characterized in that**
the respective sensor device (3) brings about the closing of the switch assigned to the respective sensor device (3) when no vehicle is detected, in particular in the charging area assigned to the sensor device (3), in particular when no vehicle is present,
and **in that**
the switch associated with the charging area is opened when a vehicle is detected in the charging area assigned to the sensor device (3).

7. Method according to claim 6,
**characterized in that**
the magnitude of the current impressed in the primary conductor (4) by the alternating current source (1) is controlled as a function of the number of closed switches of the system.

## Revendications

1. Système pour la transmission inductive de puissance électrique à des véhicules,
le système comprenant une source de courant alternatif (1) qui alimente en série plusieurs zones de charge disposées de manière stationnaire,
chaque zone de charge comprenant une section de conducteur primaire respective, présentant une capacité respective connectée en série (C1, C2, C3), à laquelle un commutateur commandable respectif est connecté en parallèle,
de sorte que la section de conducteur primaire est court-circuitée lorsque le commutateur est fermé et, lorsque le commutateur est ouvert, est alimentée à partir d'un conducteur primaire (4) alimenté par la source de courant alternatif (1),
chaque zone de charge étant associée à un montage en parallèle constitué de la section de conducteur primaire respective de la zone de charge et du commutateur respectif, et ces montages en parallèle des zones de charge étant connectés en série et ainsi alimentés en série à partir de la source de courant alternatif (1) au moyen du conducteur primaire (4),
le commutateur respectif de chaque zone de charge étant commandable par un dispositif de détection (3),
le dispositif de détection (3) détectant la présence d'un véhicule dans la zone de charge associée au dispositif de détection (3),
la capacité respective connectée en série (C1, C2, C3) étant dimensionnée de telle sorte que la fréquence de résonance du circuit oscillant formé à partir de l'inductance de la section de conducteur primaire respective (5, 6, 7) et de la capacité respective connectée en série (C1, C2, C3) corresponde à la fréquence du courant alternatif injecté dans le conducteur primaire (4), **caractérisé en ce que**
les dispositifs de détection (3) sont alimentés inductivement à partir du conducteur primaire (4), chaque dispositif de détection (3) comprenant à cet effet un enroulement secondaire couplé inductivement au conducteur primaire (4),
chaque dispositif de détection (3) comprenant un accumulateur d'énergie pour le tamponnement d'une alimentation en énergie électrique interrompue dans le temps.

2. Système selon la revendication 1,
**caractérisé en ce que**
en fonction du dépassement ou du non-dépassement d'un seuil de couplage inductif entre la section de conducteur primaire de la zone de charge et un enroulement secondaire disposé sur le véhicule, le commutateur commandable est actionné, en particulier ouvert ou fermé.

3. Système selon au moins une des revendications précédentes,
**caractérisé en ce que**
le dispositif de détection (3) est relié, au moyen d'un canal de communication, en particulier d'un canal de transmission de données, à une unité d'alimentation comprenant la source de courant alternatif (1), en particulier un appareil électrique, pour la transmission de données.

4. Système selon au moins une des revendications précédentes,
**caractérisé en ce que**
le canal de communication est réalisé au moyen de lignes de signal,
les données pouvant être transmises de l'unité d'alimentation au dispositif de détection (3) au moyen des lignes de signal,
en particulier, l'unité d'alimentation et le dispositif de détection (3) étant des participants au bus d'un bus de données.

5. Système selon au moins une des revendications précédentes,
**caractérisé en ce que**
le canal de communication comprend des signaux modulés sur le conducteur primaire (4),
qui sont modulés sur le conducteur primaire (4) par l'unité d'alimentation et/ou par le dispositif de détection (3),
en particulier, la fréquence des signaux modulés étant supérieure à la fréquence du courant alternatif injecté dans le conducteur primaire (4) par la source de courant alternatif (1), en particulier, lequel présente une fréquence comprise entre 10 et 1000 kHz.

6. Procédé pour faire fonctionner un système selon au moins une des revendications précédentes, **caractérisé en ce que**
le dispositif de détection (3) respectif, lorsqu'aucun véhicule n'est détecté, en particulier dans la zone de charge associée au dispositif de détection (3), en particulier lorsqu'aucun véhicule n'est présent, provoque la fermeture du commutateur associé au dispositif de détection (3) et **en ce que**
lorsqu'un véhicule est détecté dans la zone de charge associée au dispositif de détection (3), le commutateur associé à la zone de charge est ouvert.

7. Procédé selon la revendication 6,
**caractérisé en ce que**
en fonction du nombre de commutateurs fermés du système, la valeur du courant injecté dans le conducteur primaire (4) par la source de courant alternatif (1) est commandée.
